# EUROPÄISCHE PATENTANMELDUNG

(11) **EP 3 064 339 A1**
(43) Veröffentlichungstag der Anmeldung: **07.09.2016**
(21) Anmeldenummer: 15157633.7
(22) Anmeldetag: 04.03.2015
(51) Int. Cl.: B29C 67/00, B33Y 40/00

(54) **VERWENDUNG EINER MODIFIZIERTEN GLASPLATTE ALS TRÄGER BEI 3D-DRUCK**

(71) Anmelder: Schittmayer-Schantl, Matthias, 8044 Graz-Mariatrost (AT); Spörk, Stefan, 8311 Markt Hartmannsdorf (AT)
(72) Erfinder: Schittmayer-Schantl, Matthias, 8044 Graz-Mariatrost (AT); Spörk, Stefan, 8311 Markt Hartmannsdorf (AT)

(57) **Zusammenfassung**

Die Erfindung betrifft die Verwendung einer Glasplatte (1) als Träger bei 3D-Druck, insbesondere fused deposition modeling oder Fotolithographie. Es wird vorgeschlagen die zu bedruckende Oberfläche der Glasplatte (1) mit einer hydrophoben Beschichtung (2) zu versehen, die vorzugsweise zumindest eine Organosilan-Schicht umfasst. Die Glasplatte besteht aus einem temperaturstabilen Glasmaterial, wie z.B. Borosilikatglas oder Glaskeramik. Als 3D-Druckmaterial (6) kommt vorzugsweise ein thermoplastisches Kunststoffmaterial zum Einsatz.

## Beschreibung

Die Erfindung betrifft das Gebiet des 3D-Drucks.

Ein 3D-Drucker ist ein Apparat (in Analogie zu klassischen Druckmaschinen "Drucker" genannt), der dreidimensionale (3D) Werkstücke schichtweise aufbaut. Der Aufbau erfolgt computergesteuert aus einem oder mehreren flüssigen oder festen Werkstoffen nach vorgegebenen Maßen und Formen. Beim Aufbau finden physikalische oder chemische Härtungs- oder Schmelzprozesse statt. Typische Werkstoffe für das 3D-Drucken sind Kunststoffe, Kunstharze, Keramiken und Metalle.

Die wichtigsten Techniken des 3D-Druckens sind das selektive Laserschmelzen und das Elektronenstrahlschmelzen für Metalle, das selektive Lasersintern für Polymere, Keramik und Metalle, die Stereolithografie und das digital light processing für flüssige Kunstharze sowie das fused deposition modeling bzw. dessen spezifische Weiterentwicklung polyjetmodeling für Kunststoffe und Kunstharze.

Bei dem weit verbreiteten fused deposition modeling (deutsch: Schmelzschichtung) muss das extrudierte Material an einem als Druckbett bezeichneten Träger anhaften, um den schichtweisen Aufbau des Druckobjekts zu ermöglichen. Die Haftung muss einerseits stark genug sein, um ein Loslösen des Druckobjekts während des Druckverfahrens zu verhindern, andererseits muss sich das fertige Druckobjekt aber zerstörungsfrei vom Träger lösen lassen.

Auch beim 3D-Druckverfahren der Fotolithographie muss das Druckmaterial an einer sogenannten "Build Platform" haften. Das Grundprinzip der Fotolithografie ist die Strukturierung einer dünnen ganzflächig abgeschiedenen Opferschicht aus Fotolack durch eine lokale Änderung der chemischen Eigenschaften des Fotolacks und dessen Entfernen in den veränderten (Negativlack) oder unveränderten (Positivlack) Bereichen.

3D-Drucker dienten zunächst vor allem der Herstellung von Prototypen und Modellen, wobei es möglich ist komplexe Formen aufzubauen. Mittlerweile werden 3D-Drucker auch zur Herstellung von Werkstücken verwendet, von denen nur geringe Stückzahlen benötigt werden. Durch die stetige Verbilligung von 3D-Druckern haben neuerdings solche Geräte auch im Heimbereich Einzug gefunden.

Die Qualität von 3D-Drucken, insbesondere mittels fused deposition modeling oder Fotolithographie hergestellten 3D-Druckobjekten, hängt maßgeblich davon ab, dass das Druckobjekt während seiner Erzeugung auf der Oberfläche des Trägers verlässlich haftet. Sobald sich nämlich das Druckobjekt während des Druckvorgangs bewegt, sind nachfolgende Schichten des Druckobjekts entweder verschoben oder werden im schlimmsten Fall einfach in die Luft statt auf den Untergrund (Druckobjekt oder Träger) extrudiert, und der Druckvorgang scheitert. Augenscheinliche Faktoren, die die benötigte Adhäsion zwischen dem Träger und dem Druckobjekt beeinflussen, sind die Grundfläche des Druckobjekts sowie Scherkräfte, die auf das Druckobjekt wirken. Die Grundfläche lässt sich durch *in silico* Design des Druckobjekts (raft, brim, support material) beeinflussen, die Scherkräfte durch das Design des 3D-Druckers (in Bezug auf den Druckkopf feststehende oder bewegliche Achsen) und durch die Drucktemperatur bzw. die Viskosität des extrudierten Thermoplast-Druckmaterials. Ein weiterer wichtiger Qualitätsfaktor ist die Veränderung der extrudierten Form aufgrund von thermischen Verformungen während des Abkühlens des gedruckten Objekts, im Fachjargon als "warping" bezeichnet. Um "warping" zu vermeiden ist es notwendig, die Abkühlphase des gedruckten Objekts möglichst gut kontrollieren zu können. Deshalb zählen in den meisten Druckersystemen beheizte Aufbauumgebungen (heated build environments) oder beheizte Aufbauplattformen (heated build platforms) zur Standardausstattung. Siehe dazu das Patent US 5,866,058.

Ein weiterer Effekt, der die Qualität des 3D-Drucks beeinflusst, ist die Benetzbarkeit (wettability), die die chemische Adhäsion von thermoplastischem Druckmaterial an die Oberfläche des Trägers beeinflusst. Diese Adhäsion wird wiederum von der Viskosität des Druckmaterials und von der chemischen Ähnlichkeit des Druckmaterials und der Oberfläche des Trägers beeinflusst. Die Benetzbarkeit ist dafür verantwortlich, dass manche thermoplastische Druckmaterialien, z.B. Polylactide (PLA), auf unbehandelten Glasplatten als Träger gedruckt werden können, während andere Thermoplaste (Acrylnitril-Butadien-Styrol (ABS), Polycaprolacton und Polyamid 6.6 (Nylon)) trotz beheizter Umgebung nicht an Glasplatten haften. Um dennoch ein Anhaften des Thermoplasten an den Träger zu erreichen, wird vielfach mit selbstklebenden Bändern bzw. Folien eine Oberfläche geschaffen, die eine gute Benetzbarkeit für den jeweiligen Thermoplasten gewährleistet. Gängige Materialien sind hierbei Polyimid (Kapton®), Abklebebänder (blue painters tape®), oder PET-Bänder und Folien. Diese Methode ist sehr arbeitsaufwändig, da Lufteinschlüsse und Fugen zwischen Klebesegmenten negative Auswirkungen auf die Qualität des gedruckten Objekts haben und die Folienauflage oft nach wenigen Druckvorgängen erneuert werden muss. Die erreichte Anhaftung ist bei Kunststoffbändern und -folien gut bis sehr gut, was allerdings oft ein Ablösen der Bänder/Folie beim Loslösen des fertigen Druckobjekts zur Folge hat. Eine andere Möglichkeiten ist das Aufbringen von Haarspray oder in einem chemischen Lösungsmittel (z.B. Aceton) gelöstem ABS als haftvermittelnder Schicht auf die Oberfläche des Trägers aus Glas. Beide Methoden sind für Heimanwender gesundheitlich bedenklich, da sowohl beim Auftragen als auch während des Drucks (mit geheiztem Träger) gesundheitsschädliche Stoffe verdampfen können. Weiters wird der Druck mit dem haftvermittelndem Stoff verunreinigt, was in vielen Bereichen unerwünscht oder unakzeptabel ist. Die erreichte Anhaftung ist meist relativ schwach. Die Benetzbarkeit von Trägern aus Metall muss wie bei herkömmlichem Glas ebenfalls mittels aufgeklebter Folien verbessert werden (http://reprap.org/wiki/Bed material). Weiters werden zum Teil Träger aus Polycarbonat (Lexan®), Acrylglas, carbonfasemerstärktem Kunststoff eingesetzt. (Siehe http://reprap.org/wiki/Bed_material). Allerdings treten bei diesen Materialien andere Probleme wie zu geringe Formstabilität (Träger ist nicht plan und/oder nicht ausreichend starr), geringe Abriebsfestigkeit und vor allem niedrige Temperaturbeständigkeit auf. Polycarbonat wird z.B. selbst als Thermoplast im 3D-Druck eingesetzt. An diesen Materialien haften die gedruckten Objekte auch nach dem Abkühlen sehr stark, d.h. ein zerstörungsfreies Ablösen des Druckobjekts nach dem Drucken ist nicht gewährleistet.

Glas als Träger-Material hat gegenüber allen anderen oben genannten Materialien die Vorteile, dass es flach und starr ist, moderate thermische Leitfähigkeit aufweist, hohe thermische Stabilität besitzt, kratzfest und leicht zu reinigen ist. Außerdem ist das Druckobjekt nach dem Abkühlen im Allgemeinen leicht abzunehmen. Dem steht jedoch der gravierende Nachteil gegenüber, dass außer Polylactiden (PLA) keiner der üblicherweise verwendeten 3D-Druckwerkstoffe ausreichend gut an der Glasoberfläche anhaftet, wodurch bisher zu den oben erwähnten Hilfsmaßnahmen (Klebefolien, etc.) gegriffen werden musste. All diese Hilfsmaßnahmen sind jedoch umständlich und zeitaufwändig in der Anwendung, teilweise unverlässlich und gesundheitlich bedenklich und führen nur dann zu reproduzierbaren und zufriedenstellenden 3D-Druckergebnissen, wenn die Hilfsmaßnahmen mit höchster Sorgfalt ausgeführt werden.

Es besteht daher noch immer ein großes Bedürfnis nach verbesserter Ausrüstung für den 3D-Druck, insbesondere in der fused deposition modeling Variante, und bei der Fotolithografie, um in kürzerer Zeit bessere Druckergebnisse zu erzielen. Insbesondere besteht das Bedürfnis nach einem Träger, auch Druckbett, Basisplatte, Aufbauplattform bzw. "Build Platform" genannt, der eine zufriedenstellende Adhäsion seiner Oberfläche an einer Vielzahl von Druckmaterialien, insbesondere verschiedensten Thermoplasten und Kunstharzen bietet. Unter dem Begriff "zufriedenstellende Adhäsion" ist ein Adhäsionswert zu verstehen, der einerseits ausreichend groß ist, damit das Druckobjekt während des Druckvorgangs nicht auf dem Träger verrutscht, andererseits aber auch ausreichend gering ist, damit das Druckobjekt nach dem Druckvorgang ohne Beschädigung vom Träger gelöst werden kann.

Die vorliegende Erfindung schlägt zur Lösung der gestellten Aufgabe die Verwendung einer Glasplatte als Träger bei 3D-Druck, insbesondere fused deposition modeling oder Fotolithographie vor, wobei die zu bedruckende Oberfläche der Glasplatte mit einer hydrophoben Beschichtung versehen ist. Mit diesem Vorschlag können einerseits die oben beschriebenen positiven Eigenschaften von Glas als Trägermaterial ausgenützt werden, andererseits wird jedoch durch die hydrophobe Beschichtung der zu bedruckenden Glasoberfläche überraschenderweise eine höhere Haftfähigkeit des 3D-Druckmaterials, insbesondere bei Verwendung von thermoplastischem Druckmaterial, an der modifizierten Glasoberfläche bewirkt. Die Beschichtung von Gläsern mit hydrophoben Beschichtungen ist an sich nicht neu, wurde jedoch bisher für einen gegenteiligen Zweck als bei der Erfindung verwendet, nämlich um Glas wasserabstoßend zu machen, d.h. die Adhäsion zwischen Wasser und der Glasplatte zu verringern. Besonders gute 3D-Druckergebnisse, insbesondere bei fused deposition modeling oder Fotolithographie, werden erzielt, wenn die hydrophobe Beschichtung zumindest eine Organosilan-Schicht umfasst, weil sich dabei eine Haftfähigkeit zwischen Träger und Druckmaterial ergibt, die ein Verrutschen des Druckobjekts während seiner Herstellung verhindert und es dennoch ermöglicht, das fertig gestellte Druckobjekt beschädigungsfrei vom Träger zu lösen. Hervorragende 3D-Druckergebnisse erzielt man, wenn als Organosilan-Schicht Trimethylsilylchlorid verwendet wird, vorzugsweise in Kombination mit ABS als 3D-Druckmaterial.

Oberflächenmodifizierte Gläser wurden schon in verschiedenen Bereichen eingesetzt. Ein großer Anwendungsbereich sind Antihaftbeschichtungen, die in chemischen Labors, aber auch in der Architektur und Automobilindustrie das Anhaften von Wasser und Verunreinigungen an Glasflächen verhindern sollen. Siehe den Artikel "Non-sticking drops", David Quere, Laboratoire de Physique de la Matière Condensee, URA 7125 du CNRS, College de France, Rep. Prog. Phys. 68 (2005) 2495-2532. Ein anderer Anwendungsbereich sind Verbundwerkstoffe wie glasfaserverstärkter Kunststoff, bei denen eine dauerhafte Verbindung zwischen Glas und Polymer hergestellt werden soll. Siehe Artikel "Glass Fiber Reinforced Polypropylene Mechanical Properties Enhancement by Adhesion Improvement", Mariana Etcheverry and Silvia E. Barbosa; Materials 2012, 5, 1084-1113.

Eine Verwendung von hydrophob beschichteten Gläsern als Träger im 3D-Druck, insbesondere bei fused deposition modeling und in der Fotolithographie, ist bis jetzt nicht vorgeschlagen worden, obwohl der 3D-Druck bereits seit Jahrzehnten bekannt ist und intensiv daran geforscht wird, weil es sich um einen Markt mit riesigem Potential handelt. Beispielsweise beschreiben Marktdaten von statista (http://www.manager-magazin.de/unternehmen/it/a-968509.html) den weltweiten Markt für 3D-Drucker als stark wachsend und schätzen eine Umsatzsteigerung für 3D-Drucker von 1,3 Milliarden USD im Jahr 2014 auf 5,4 Milliarden USD im Jahr 2018.

Es ist erfindungsgemäß bevorzugt, eine Glasplatte aus Borosilikatglas oder aus Glaskeramik als Träger zu verwenden, weil diese Gläser hervorragende Temperaturstabilität aufweisen.

Erfindungsgemäß eignet sich die vorgeschlagene, hydrophob, insbesondere mit einem Organosilan, beschichtete Glasplatte besonders gut als Träger bei 3D-Druck, insbesondere bei fused deposition modeling oder Fotolithographie, bei Verwendung eines thermoplastischen Kunststoffmaterials als Druckmaterial. Diese thermoplastischen Kunststoffmaterialien umfassen insbesondere Acrylnitril-Butadien-Styrol (ABS), Polycaprolacton und Polyamid 6.6 (Nylon).

Es hat sich gezeigt, dass die Adhäsion der erfindungsgemäß vorgeschlagenen hydrophob beschichteten Glasplatte an 3D-Druckmaterial, insbesondere an thermoplastischen Kunststoffen, erhöht werden kann, wenn die Glasplatte vor Beginn des Druckvorgangs erwärmt wird, insbesondere auf eine Temperatur zwischen 50 und 120 °C. Umgekehrt hat sich gezeigt, dass die Adhäsion der erfindungsgemäß vorgeschlagenen hydrophob beschichteten Glasplatte an 3D-Druckmaterial, insbesondere zu thermoplastischen Kunststoffen, verringert wird, wenn nach erfolgtem 3D-Drucken die Glasplatte gekühlt wird, insbesondere auf Umgebungstemperatur, und zwar entweder durch aktives Kühlen oder durch passives Auskühlen-lassen. Durch die durch Abkühlung verringerte Adhäsion lässt sich das gedruckte 3D-Objekt leicht vom Träger abnehmen, ohne dabei Schaden zu nehmen. Durch eine an den Thermoplasten angepasste Oberflächenbeschichtung kann der temperaturabhängige Adhäsionsgrad der Glasplatte zum 3D-Druckmaterial optimal auf den jeweiligen Verfahrensschritt (Drucken oder Abnehmen) angepasst werden.

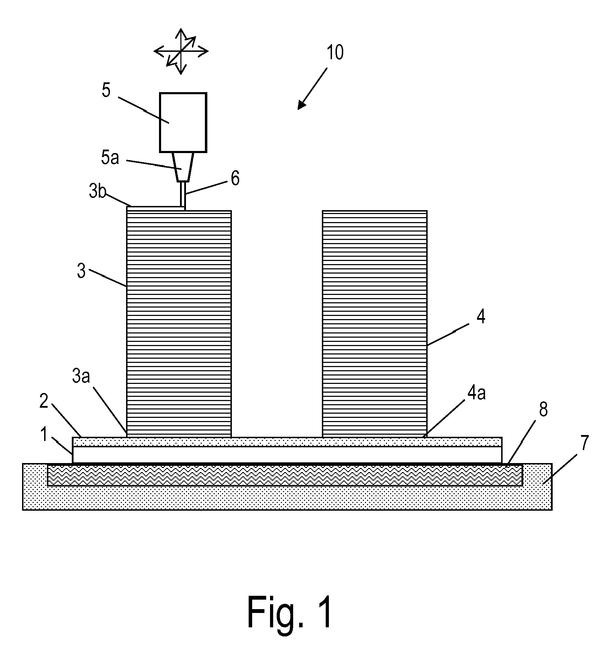

Anhand von Fig. 1 wird nun eine Ausführungsform der erfindungsgemäßen Verwendung einer Glasplatte 1 als Träger bei 3D-Druck in Form des fused deposition modeling näher erläutert.

Zunächst erfolgt die Vorbereitung der Glasplatte, wobei vorzugsweise Borosilikatglas, Glaskeramik oder eine andere temperaturstabile Glasart verwendet wird, durch Reinigen und chemische Aktivierung von zumindest jener Oberfläche der Glasplatte, auf die 3D-Objekte aufgedruckt werden sollen. Die chemische Aktivierung schafft freie Silanolgruppen, an die das Organosilosan gebunden werden kann. Die Reinigung und chemische Aktivierung der Glasplatte kann mittels Anätzen durch z.B. in Ethanol gelöstem Kaliumhydroxid erfolgen. Anschließend wird auf die gereinigte Glasplatte eine hydrophobe Beschichtung aufgebracht. Das Aufbringen der hydrophoben Beschichtung erfolgt vorzugsweise mittels Aufdampfen, wie an sich aus den WO 2002/028956 und US 2005/175847 bekannt. Als Material der hydrophoben Beschichtung sind Organosilane hervorragend geeignet, wobei neben dem oben erwähnten Trimethylsilylchlorid, das bevorzugt in Kombination mit ABS als 3D-Druckmaterial verwendet wird, auch beispielsweise Chloromethylsilan, Trichloromethylsilan und Thrichlorophenylsilan ausgezeichnete Ergebnisse liefern. Des weiteren können definierte Gemische von Organosilanen zur genauen Anpassung der Oberflächeneigenschaften verwendet werden. Die beschichtete Glasplatte ist nach dem Trocknen der aufgedampften hydrophoben Schicht lagerfähig und kann weiter bearbeitet werden, z.B. in passende Größen geschnitten werden. Es ist vorgesehen, die Herstellung der hydrophob beschichteten Glasplatte in einer Fabrik unter wohldefinierten Bedingungen durchzuführen, wodurch der Endverbraucher nicht selbst mit chemischen Substanzen hantieren muss, sondern die fertig beschichteten Glasplatten kaufen kann.

Wie in Fig. 1 schematisch in Seitenansicht dargestellt ist, umfasst ein 3D-Drucker 10 für fused deposition modeling einen Support 7, in dem eine Flächentemperiereinrichtung 8 eingebaut ist. Die Flächentemperiereinrichtung 8 kann entweder als, vorzugsweise geregelte, Heizeinrichtung konzipiert sein, oder als Heiz- und Kühleinrichtung. Die hydrophob beschichtete Glasplatte 1 wird so auf den Support 7 aufgelegt, dass ihre hydrophobe Beschichtung 2 einem 3D-Druckkopf 5 zugewandt ist, der dreidimensional in einem nicht dargestellten Gestell verfahrbar ist, wobei die Bewegungen des 3D-Druckkopfes 5 computergesteuert zum Aufbau eines vordefinierten 3D-Druckobjekts erfolgen. Nachdem die Glasplatte 1 auf dem Support 7 aufgelegt worden ist, wird sie durch die Flächentemperiereinrichtung 8 auf eine gewünschte Temperatur erwärmt, bei der die Adhäsion der hydrophoben Beschichtung 2 zu 3D-Druckmaterial einen gewünschten Mindestwert aufweist. Anschließend kann der 3D-Druck beginnen, wofür der 3D-Druckkopf 5 zur Glasplatte 1 bewegt wird und aus einer Düse 5a eine erste Schicht 3a, 4a eines 3D-Druckmaterials 6, vorzugsweise ein thermoplastisches Kunststoffmaterial, in pastösem oder flüssigen Zustand auf die hydrophobe Beschichtung 2 extrudiert wird. Nach dem Erstarren der ersten Schicht 3a, 4a des 3D-Druckmaterials 6 werden weitere Schichten des 3D-Druckmaterials 6 aufgebracht und erstarren gelassen, wodurch sukzessive die beiden in Fig. 1 dargestellten Türme 3, 4, als 3D-Druckobjekte entstehen. In Fig. 1 ist der Zustand dargestellt, bei dem gerade am Turm 3 eine oberste Schicht 3b aufgetragen wird. Nachdem die beiden Türme 3, 4 fertig gedruckt worden sind, wird die Beheizung der Glasplatte durch die Flächentemperiereinrichtung 8 abgestellt und je nach Ausführungsform der Flächentemperiereinrichtung 8 die Glasplatte 1 einfach auf Umgebungstemperatur abkühlen gelassen oder die Flächentemperiereinrichtung 8 in einen aktiven Kühlmodus umgeschaltet. Nachdem die Glasplatte 1 auf eine gewünschte Temperatur abgekühlt worden ist, bei der sich die Adhäsion zum 3D-Druckmaterial 6 auf einen gewünschten Wert reduziert hat, können die 3D-Druckobjekte von der hydrophoben Beschichtung 2 der Glasplatte 1 abgenommen werden, und es kann ein weiterer 3D-Druckvorgang gestartet werden. Die erfindungsgemäß vorgeschlagenen Glasplatten 1 sind für eine Vielzahl von 3D-Druckvorgängen geeignet.

Die erfindungsgemäß vorgeschlagene hydrophob beschichtete Glasplatte 1 erlaubt den 3D-Druck mittels fused deposition modeling mit einer breiten Palette an Thermoplasten und gegebenenfalls auch Photopolymeren als 3D-Druckmaterial. Es ist keine weitere Vorbereitung der hydrophob beschichteten Glasplatte 1 notwendig. Die Glasplatte 1 ist plan, starr, abriebsfest, lösungsmittel- und temperaturbeständig. Eine Desinfektion der erfindungsgemäß vorgeschlagenen hydrophob beschichteten Glasplatte für Anwendungen im medizinischen Bereich ist sowohl mit chemischen als auch thermischen Methoden möglich.

## Patentansprüche

1. Verwendung einer Glasplatte (1) als Träger bei 3D-Druck, insbesondere fused deposition modeling oder Fotolithographie, **dadurch gekennzeichnet, dass** die zu bedruckende Oberfläche der Glasplatte (1) mit einer hydrophoben Beschichtung (2) versehen ist.

2. Verwendung einer Glasplatte als Träger bei 3D-Druck nach Anspruch 1, **dadurch gekennzeichnet, dass** die hydrophobe Beschichtung (2) zumindest eine Organosilan-Schicht umfasst.

3. Verwendung einer Glasplatte als Träger bei 3D-Druck nach Anspruch 2, **dadurch gekennzeichnet, dass** die Organosilan-Schicht Trimethylsilylchlorid umfasst, vorzugsweise in Kombination mit dem Kunststoff ABS als 3D-Druckmaterial (6) für den 3D-Druck.

4. Verwendung einer Glasplatte als Träger bei 3D-Druck nach einem der Ansprüche 1 bis 3, **dadurch gekennzeichnet, dass** die Glasplatte (1) aus Borosilikatglas besteht.

5. Verwendung einer Glasplatte als Träger bei 3D-Druck nach einem der Ansprüche 1 bis 3, **dadurch gekennzeichnet, dass** die Glasplatte (1) aus Glaskeramik besteht.

6. Verwendung einer Glasplatte als Träger bei 3D-Druck nach einem der vorhergehenden Ansprüche, **dadurch gekennzeichnet, dass** ein thermoplastisches Kunststoffmaterial als 3D-Druckmaterial (6) verwendet wird.

7. Verwendung einer Glasplatte als Träger bei 3D-Druck nach einem der vorhergehenden Ansprüche, **dadurch gekennzeichnet, dass** die Glasplatte (1) vor Beginn des Druckvorgangs erwärmt wird, insbesondere auf eine Temperatur zwischen 50 und 120 °C.

8. Verwendung einer Glasplatte als Träger bei 3D-Druck nach einem der vorhergehenden Ansprüche, **dadurch gekennzeichnet, dass** die Glasplatte (1) vor dem Abnehmen des gedruckten Objekts (3, 4) abgekühlt wird, insbesondere auf Umgebungstemperatur.
